# EUROPÄISCHE PATENTANMELDUNG

(11) **EP 4 382 008 A1**
(43) Veröffentlichungstag der Anmeldung: **12.06.2024**
(21) Anmeldenummer: 22211416.7
(22) Anmeldetag: 05.12.2022
(51) Int. Cl.: A47J 36/32, A47J 27/00, A47J 27/08

(54) **SYSTEM MIT SCHNELLKOCHTOPF UND VERFAHREN**

(71) Anmelder: Vorwerk & Co. Interholding GmbH, 42270 Wuppertal (DE)
(72) Erfinder: TIETZ, Sebastian, 51379 Leverkusen (DE); SCHMITZ, Dr., Kevin, 42781 Haan-Gruiten (DE); DÖRNER, Maria, 50764 Köln (DE)
(74) Vertreter: Gille Hrabal Partnerschaftsgesellschaft mbB Patentanwälte

(57) **Zusammenfassung**

Die Erfindung betrifft System und ein Verfahren mit einem Küchengerät zur Zubereitung eines Nahrungsmittels. Das System umfasst eine Steuerungseinrichtung (4) und eine Einrichtung für ein Auswählen einer Zubereitungszeit für Nahrungsmittel (17). Die Steuerungseinrichtung (4) ist so eingerichtet, dass diese die Zubereitung eines Nahrungsmittels so steuern kann, dass eine ausgewählte Zubereitungszeit eingehalten wird. Das Küchengerät kann einen Schnellkochtopf (2) umfassen.

Durch die Erfindung kann eine Wunschzeit für die Zubereitung eines Nahrungsmittels eingehalten werden.

## Beschreibung

Die Erfindung betrifft ein System mit einem Küchengerät für die Zubereitung von Nahrungsmitteln. Das System umfasst eine Steuerungseinrichtung für das Steuern der Zubereitung von Nahrungsmitteln durch das Küchengerät. Das Küchengerät kann ein Schnellkochtopf sein oder einen Schnellkochtopf umfassen.

Um Nahrungsmittel in einem Schnellkochtopf zuzubereiten, kann ein Schnellkochtopf unter Zuhilfenahme von Gartabellen beispielsweise mit Hilfe eines Kochfeldes beheizt und zu einem definierten Zeitpunkt vom Kochfeld genommen werden.

Die Druckschrift DE 10 2008 051 265 A1 betrifft eine Steuerungsvorrichtung für einen Schnellkochtopf, die eine Sensorvorrichtung umfasst. Mit der Sensorvorrichtung kann ein Parameter, der den Garprozess beeinflusst, gemessen werden. Es kann mithilfe der Steuerungsvorrichtung die Zubereitung von Nahrungsmitteln optimiert werden.

Die Druckschrift DE 197 00 602 A1 offenbart ein Druckgargefäß mit einer elektronischen Überwachungseinrichtung für die Zubereitung von Nahrungsmitteln.

Es ist Aufgabe der Erfindung, flexibel Nahrungsmittel zubereiten zu können.

Die Aufgabe wird durch ein System mit den Merkmalen des ersten Anspruchs und ein Verfahren mit den Merkmalen des Nebenspruchs gelöst.

Das System umfasst ein Küchengerät, mit dem ein Nahrungsmittel zubereitet werden kann. Das Küchengerät kann eine Zubereitungsgefäß oder einen Zubereitungsraum umfassen. Soll ein Nahrungsmittel mithilfe eines solchen Küchengeräts zubereitet werden, so wird das Nahrungsmittel in das Zubereitungsgefäß bzw. in den Zubereitungsraum gebracht. In dem Zubereitungsgefäß bzw. in dem Zubereitungsraum wird das Nahrungsmittel bearbeitet. Eine Bearbeitung kann das Mischen, Zerkleinern, und/oder Temperieren umfassen. Das Küchengerät kann eine Heizeinrichtung umfassen, mit der ein in das Zubereitungsgefäß bzw. in den Zubereitungsraum gebrachtes Nahrungsmittel erhitzt werden kann.

Ein Küchengerät, das der Nahrungsmittelzubereitung dient, kann beispielsweise eine Küchenmaschine, ein Kochfeld mit einem auf dem Kochfeld befindlichen Zubereitungsgefäß, ein Backofen, ein Dampfgarer, eine Fritteuse, oder eine Mikrowelle sein.

Ein Nahrungsmittel kann von einem Lebewesen gegessen werden, um so das Lebewesen zu ernähren. Mit dem Küchengerät können beispielsweise Nahrungsmittel wie Gulasch, Tafelspitz, Hähnchen, Schmorbraten, Gemüse oder Kartoffeln zubereitet werden.

Das System umfasst eine Steuerungseinrichtung. Eine Steuerungseinrichtung ist eine elektronische Einrichtung, mit der Vorgänge elektronisch gesteuert werden können. Eine Steuerungseinrichtung kann einen Prozessor, einen Mikrokontroller sowie elektronische Speicherbausteine umfassen.

Die Steuerungseinrichtung kann in das Küchengerät integriert sein. Die Steuerungseinrichtung kann von dem Küchengerät getrennt sein. Die Steuerungseinrichtung kann in ein anderes Küchengerät, in ein mobiles Gerät oder in der Cloud integriert sein. Mit Cloud ist gemeint, dass die Datenbank so bereitgestellt wird, dass auf diese über das Internet zugegriffen werden kann. Für das Bereitstellen können ein oder mehrere Speicherplätze und ein oder mehrere Computer nebst Software verwendet werden. Speicherplätze und Computer können räumlich getrennt sein.

Das System kann eine Einrichtung für ein Auswählen einer Zubereitungszeit für Nahrungsmittel umfassen. Die Einrichtung kann beispielsweise eine Tastatur, ein Mikrofon nebst Spracherkennungseinrichtung, ein Display oder ein oder mehrere Schalter, Drehregler und/oder Schieberegler umfassen. Das Display kann ein berührungsempfindliches Display sein.

Mit Zubereitungszeit ist eine Zeit gemeint, die für die Zubereitung eines Nahrungsmittels aufgewendet werden soll. Es kann beispielsweise eine Zeit eingestellt werden wie zum Beispiel 12:00 Uhr. Dann soll das Nahrungsmittel durch das Küchengerät um 12:00 Uhr zubereitet sein. Es kann beispielsweise ein Zeitraum eingestellt werden wie zum Beispiel 30 Minuten. Dann soll das Nahrungsmittel durch das Küchengerät nach 30 Minuten zubereitet sein. Die Einrichtung für ein Auswählen einer Zubereitungszeit kann so eingerichtet sein, dass diese mögliche Zeiten vorgibt, aus denen ausgewählt werden kann. Beispielsweise kann die Einrichtung für ein Auswählen einer Zubereitungszeit vorgeben, dass ein Nahrungsmittel zwischen 11:30 Uhr und 12:30 Uhr fertig zubereitet sein kann. Es kann dann eine Zeit zwischen 11:30 Uhr und 12:30 Uhr frei ausgewählt werden. Beispielsweise kann die Einrichtung für ein Auswählen einer Zubereitungszeit vorgeben, dass ein Nahrungsmittel innerhalb von 20 Minuten bis 60 Minuten fertig zubereitet werden kann. Es kann dann ein Zeitraum von 20 Minuten bis 60 Minuten frei ausgewählt werden.

Die Steuerungseinrichtung ist so eingerichtet, dass diese die Zubereitung des Nahrungsmittels so steuern kann, dass eine ausgewählte Zubereitungszeit eingehalten wird. Ist beispielsweise 12:00 Uhr ausgewählt worden, dann wird das Nahrungsmittel so zubereitet, dass die Zubereitung durch das Küchengerät um 12:00 Uhr beendet ist. Sind beispielsweise 30 Minuten ausgewählt worden, dann wird das Nahrungsmittel so zubereitet, dass die Zubereitung durch das Küchengerät 30 Minuten später nach einem Start der Zubereitung beendet ist. Mit Zubereitung ist gemeint, dass durch die Zubereitung ein gewünschter gleicher oder zumindest im Wesentlichen gleicher Zustand des Nahrungsmittels erreicht worden ist und zwar unabhängig von der Dauer einer ausgewählten Zubereitungszeit. Der Zustand eines Nahrungsmittels hängt nach dem Ende der Zubereitung also nicht davon ab, ob die Zubereitung 30 Minuten oder 40 Minuten gedauert hat.

Durch die Erfindung kann ein Benutzer die Dauer für die Zubereitung von Nahrungsmitteln zumindest innerhalb von gewissen Grenzen einstellen. Beispielsweise verspäten sich Gäste und das Essen soll nicht übergaren, aber auch nicht kalt werden. Es kann dann eine Zeit so eingestellt werden, dass trotz Verspätung der Gäste Nahrungsmittel des Essens geeignet später fertig zubereitet sind.

Das System kann so eingerichtet sein, dass es auf die Zubereitung von bestimmten Nahrungsmitteln spezialisiert ist. In einem solchen Fall ist es nicht erforderlich, dass der Steuerungseinrichtung mitgeteilt worden ist, welches Nahrungsmittel zubereitet werden soll, um in Abhängigkeit von einem Nahrungsmittel die Zubereitung zu steuern. Wird durch ein Küchengerät also beispielsweise immer nur ein bestimmtes Nahrungsmittel zubereitet, dann genügt ein Programm der Steuerungseinrichtung, um ein Nahrungsmittel zu einer ausgewählten Zeit fertigstellen zu können.

Das System kann eine Einrichtung für ein Eingeben von Nahrungsmitteln umfassen. Die Einrichtung für ein Eingeben von Nahrungsmitteln kann beispielsweise eine Tastatur, ein Mikrofon nebst Spracherkennungseinrichtung, ein Display oder ein oder mehrere Schalter, Drehregler und/oder Schieberegler umfassen. Das Display kann ein berührungsempfindliches Display sein. Ein Benutzer kann ein Nahrungsmittel, welches zubereitet werden soll, dem System über die Einrichtung für ein Eingeben von Nahrungsmitteln mitteilen. Die Einrichtung für ein Eingeben von Nahrungsmitteln kann beispielsweise im Anschluss an eine Aktivierung eine Liste mit Nahrungsmitteln beispielsweise auf einem Bildschirm anzeigen. Ein Benutzer kann dann aus der Liste ein Nahrungsmittel auswählen und so das Nahrungsmittel wählen, welches durch das Küchengerät zubereitet werden soll. Es kann aber auch sein, dass ein Benutzer den Namen eines Nahrungsmittels beispielsweise über eine Tastatur eintippen kann. Eine Eingabe kann über eine Auswahl eines Rezeptes erfolgen.

Das System kann eine Datenbank mit elektronisch gespeicherten Informationen über Garzeiten von Nahrungsmitteln in Abhängigkeit von Temperatur und/oder Menge für das Steuern der Zubereitung des Nahrungsmittels durch das Küchengerät umfassen. Die Steuerungseinrichtung kann dann aus der Datenbank das eingegebene Nahrungsmittel auswählen und aufgrund der in der Datenbank elektronisch gespeicherten Informationen die Zubereitung steuern. Das System ist dann in der Lage, die Zubereitung für verschiedene Nahrungsmittel so zu steuern, dass die ausgewählte Zubereitungszeit eingehalten wird. Die Datenbank kann in das Küchengerät oder in ein anderes Gerät integriert sein. Die Datenbank kann mittels Cloud bereitgestellt werden.

Das Steuern der Zubereitung eines Nahrungsmittels durch die Steuerungseinrichtung kann eine Ausgabe einer Anweisung für einen Nutzer umfassen. Dies gilt insbesondere für Tätigkeiten, die nur mit einem übermäßig großen technischen Aufwand vollautomatisiert durchgeführt werden können. Eine solche Anweisung kann beispielsweise darin bestehen, dass ein Benutzer beispielsweise über ein Display, ein anderes optisches Element und/oder akustisch aufgefordert wird, ein Speisenzubereitungsgefäß des Küchengeräts von einem für ein Erhitzen des Speisenzubereitungsgefäßes vorgesehenes Basisgerät des Küchengeräts zu entfernen oder auf andere Weise die Zufuhr von Hitze abzuschalten. Das Steuern der Zubereitung eines Nahrungsmittels durch die Steuerungseinrichtung kann umfassen, dass automatisiert die Zubereitung gesteuert wird. So kann das Steuern der Zubereitung eines Nahrungsmittels umfassen, dass ein Erhitzen eines Nahrungsmittels durch das Küchengerät automatisiert geregelt wird. Das Basisgerät kann ein Kochfeld eines Herds sein. Das Basisgerät kann ein Teil einer Küchenmaschine sein. Für das Steuern der Zubereitung eines Nahrungsmittels kann ein elektronisch gespeichertes Rezept bereitgestellt sein, auf das die Steuerungseinrichtung zugreifen kann.

Das Küchengerät ist vorzugsweise ein Schnellkochtopf oder umfasst einen Schnellkochtopf. Ein Schnellkochtopf kann zeitlich sehr variabel ein Nahrungsmittel zubereiten. Es kann bei Bedarf ein Nahrungsmittel mit geringer Temperatur sehr langsam und damit besonders zeitaufwendig gegart und damit zubereitet werden. Es kann bei Bedarf ein Nahrungsmittel mit einer Temperatur von beispielsweise mehr als 110°C sehr schnell und damit wenig zeitaufwendig zubereitet werden. Ein Schnellkochtopf ermöglicht es daher, eine gewünschte Zubereitungszeit sehr variabel auswählen zu können.
Der Schnellkochtopf ist ein Zubereitungsgefäß mit Deckel für eine Speise. Durch den Deckel kann das Zubereitungsgefäß druckfest geschlossen werden. Es kann sich dann in dem Zubereitungsgefäß ein erhöhter Druck von zum Beispiel mehr als 1,2 bar aufbauen. Der erhöhte Druck kann beispielsweise bis zu 2 bar oder bis zu 1,5 bar betragen. Das Zubereitungsgefäß des Schnellkochtopfes kann eine Öffnung mit einem nach außen gebogenen Rand mit bajonettartigen Aussparungen umfassen. Der Deckel kann dann druckfest das Zubereitungsgefäß verschießen. Eine ringförmige Dichtung kann sich zwischen dem Deckel und dem Zubereitungsgefäß so befinden, dass sich ein erhöhter Druck im Zubereitungsgefäß aufbauen kann. Die Dichtung kann aus einem Elastomer bestehen.

Durch den erhöhten Druck kann die Siedetemperatur von Wasser in dem Schnellkochtopf erhöht werden. Die maximal mögliche Siedetemperatur kann in dem Schnellkochtopf beispielsweise bis zu 120°C betragen. Die maximal mögliche Siedetemperatur sollte in dem Schnellkochtopf bei wenigstens 110°C liegen.

Der Schnellkochtopf kann ein Sicherheitsventil umfassen, das sich öffnet, wenn im Schnellkochtopf ein unplanmäßig hoher Druck entsteht. Das Entstehen eines unzulässig großen Drucks in dem Schnellkochtopf kann durch das Sicherheitsventil vermieden werden. Durch das Sicherheitsventil kann also der maximal mögliche Druck im Schnellkochtopf begrenzt werden.

Der Schnellkochtopf kann ein Regelventil umfassen. Durch das Regelventil kann ein Druck im Schnellkochtopf angezeigt werden. Ein Regelventil kann beispielsweise einen beweglichen Stift umfassen, dessen Position von dem Druck im Schnellkochtopf abhängen kann. Der Stift kann Markierungen aufweisen, die in Abhängigkeit vom Druck sichtbar werden und so einen im Schnellkochtopf herrschenden Druck anzeigen können. Ein Schnellkochtopf kann so eingerichtet sein, dass sein Deckel nur geöffnet werden kann, wenn im Schnellkochtopf kein Überdruck herrscht.

Ein Ventil des Schnellkochtopfs kann so sein, dass das Ventil geöffnet werden kann, um einen Überdruck im Schnellkochtopf abbauen zu können.

Der Schnellkochtopf kann einen Einsatz umfassen, durch den vermieden werden kann, dass eine Speise mit flüssigem Wasser im Schnellkochtopf in Berührung kommen kann. Eine Speise kann dann im Dampf gegart werden.

Im Schnellkochtopf kann ein Misch- und/oder Schneidwerkzeug vorhanden sein. Die Welle des Misch- und/oder Schneidwerkzeugs kann beispielsweise durch den Boden des Schnellkochtopfs hindurchgeführt sein, um das Misch- und/oder Schneidwerkzeug durch einen externen Motor antreiben zu können.

Die Steuerungseinrichtung kann so eingerichtet sein, dass diese die Zubereitung einer Nahrung so steuert, dass ein Nahrungsmittel im Schnellkochtopf zunächst mit maximal möglicher Temperatur zubereitet wird. Zu einem späteren Zeitpunkt wird der Schnellkochtopf von einem Basisgerät getrennt, über welches der Schnellkochtopf erhitzt wird. Bei dieser Ausgestaltung der Erfindung kann einerseits das Nahrungsmittel innerhalb der gewünschten Zeit fertig zubereitet werden. Andererseits kann das Basisgerät nach dem Entfernen des Schnellkochtopfs mit einem anderen Zubereitungsgefäß erneut benutzt werden. Das andere Zubereitungsgefäß kann ein Zubereitungsgefäß sein, das anders ist als der Schnellkochtopf, also nicht gleich wie der Schnellkochtopf ist. Das Volumen und/oder der Durchmesser des anderen Zubereitungsgefäßes können sich von dem Volumen und/oder dem Durchmesser des Schnellkochtopfes unterscheiden. Eine Heizeinrichtung des anderen Zubereitungsgefäßes kann sich von der Heizeinrichtung des Schnellkochtopfs unterscheiden. Im anderen Zubereitungsgefäß kann sich ein Werkzeug befinden, das der Schnellkochtopf nicht hat. Das andere Zubereitungsgefäß kann so sein, dass sich im anderen Zubereitungsgefäß kein Überdruck oder zumindest praktisch kein Überdruck aufbauen kann. Material des anderen Zubereitungsgefäßes kann sich von Material des Schnellkochtopfes unterscheiden. Die Verwendung des Basisgeräts für die Zubereitung von Nahrungsmitteln kann also optimiert werden. Es ist außerdem möglich, nach dem Trennen des Schnellkochtopfes von dem Basisgerät den Schnellkochtopf auch außerhalb des Haushalts weitergaren zu lassen, so zum Beispiel im Auto auf den Weg zu Freunden, etc..

Das System kann eine Eingabeeinrichtung umfassen, in die eingegeben werden kann, wie lange ein Nahrungsmittel in einem Schnellkochtopf unabhängig von einem Basisgerät weitergaren soll. Über ein elektronisch bereitgestelltes Rezept kann eine Vorauswahl für ein oder mehrere Zeiträume angeboten werden. So kann es von Interesse sein, dass ein Nahrungsmittel so lange wie möglich in einem Schnellkochtopf unabhängig von einem Basisgerät weitergaren soll. Ein solcher Bedarf kann bestehen, weil ein Schnellkochtopf zu Freunden mitgenommen werden soll oder um ein Basisgerät so lange wie möglich für eine andere Zubereitung nutzen zu können. Soll ein Nahrungsmittel so lange wie möglich in einem Schnellkochtopf unabhängig von einem Basisgerät weitergaren, so steuert die Steuerungseinrichtung die Temperatur des Schnellkochtopfs grundsätzlich so, dass diese maximal ist, wenn der Schnellkochtopf vom Basisgerät getrennt werden soll.

In einer Datenbank kann der für eine Zubereitung eines Nahrungsmittels benötigte Zeitbedarf für verschiedene Temperaturen gespeichert sein. Je geringer die Temperatur ist, umso mehr Zeit wird für die Zubereitung eines Nahrungsmittels benötigt. Es kann in der Datenbank eine Aufheiz- und Abkühlcharakteristik für das Zubereitungsgefäß gespeichert sein. Die Steuerungseinrichtung kann auf die in der Datenbank hinterlegten Daten bzw. Informationen zugreifen, um berechnen zu können, wie eine Zubereitung zu steuern ist.

Steht hinreichend Zeit zur Verfügung, so kann die Steuerungseinrichtung die Zubereitung so steuern, dass nicht nur innerhalb einer ausgewählten Zeit die Zubereitung beendet ist, sondern dass dann ein Schnellkochtopf auch druckfrei ist. Im Schnellkochtopf herrscht also am Ende einer Zubereitungszeit kein Überdruck mehr. Der Schnellkochtopf kann dann also sofort geöffnet werden. Vorzugsweise wird dann die Zubereitung so gesteuert, dass ein Nahrungsmittel zubereitet ist, wenn im Schnellkochtopf der Atmosphärendruck wieder erreicht ist. Der Schnellkochtopf kann so eingerichtet sein, dass dieser erst geöffnet werden kann, wenn Atmosphärendruck herrscht. Dann ist sichergestellt, dass ein Benutzer den Schnellkochtopf nicht vor Ablauf der Garzeit nachteilhaft öffnen kann.

Die Erfindung betrifft auch ein Verfahren für eine Zubereitung eines Nahrungsmittels mit einem erfindungsgemäßen System. Eine Zubereitungszeit wird über die Einrichtung für ein Auswählen einer Zubereitungszeit ausgewählt. Im Anschluss daran steuert die Steuerungseinrichtung die Zubereitung des Nahrungsmittels so, dass die ausgewählte Zubereitungszeit eingehalten wird.

In einer Ausgestaltung ist das System so eingerichtet, dass eine ausgewählte Zubereitungszeit während einer Zubereitung geändert werden kann. Zur Erfindung gehört daher auch ein Verfahren, bei dem eine Zubereitungszeit über die Einrichtung für ein Auswählen einer Zubereitungszeit anfänglich ausgewählt wird. Nach Beginn der Zubereitung wird eine andere Zeit ausgewählt. Im Anschluss daran steuert die Steuerungseinrichtung die Zubereitung des Nahrungsmittels so, dass die zuletzt ausgewählte Zubereitungszeit eingehalten wird.

In einer Ausgestaltung des Verfahrens wird ein Nahrungsmittel mithilfe der Einrichtung für ein Eingeben eines Nahrungsmittels eingegeben. Die Steuerungseinrichtung des Systems wählt im Anschluss daran aus der Datenbank mit den elektronisch gespeicherten Informationen über Garzeiten von Nahrungsmitteln das eingegebene Nahrungsmittel aus und erhält so die zugehörigen Informationen. Im Anschluss daran wird die Zubereitung des Nahrungsmittels mithilfe der Informationen durch die Steuerungseinrichtung gesteuert.

Im Rahmen der Zubereitung des Nahrungsmittels kann eine Anweisung für einen Nutzer optisch über ein Display, ein anderes optisches Element und/ oder akustisch über einen Lautsprecher ausgegeben werden. Eine solche Anweisung kann darin bestehen, dass die Zufuhr von Hitze zu dem Nahrungsmittel vor dem Ende der Garzeit abgeschaltet wird. Eine solche Anweisung kann darin bestehen, dass ein Zubereitungsgefäß des Küchengeräts von einem Basisgerät des Küchengeräts vor dem Ende der Garzeit entfernt wird.

Im Rahmen des Verfahrens wird vorzugsweise ein Schnellkochtopf, dem mithilfe eines Basisgeräts Hitze zugeführt wird, als Küchengerät ausgewählt. Der Schnellkochtopf kann aber auch eine integrierte Heizung umfassen, so dass dann ein Basisgerät nicht vorhanden sein muss. Die Heizung kann durch ein oder mehrere Widerstandsdrähte gebildet sein oder ein oder mehrere Widerstandsdrähte umfassen. Fließt ein elektrischer Strom durch einen Widerstandsdraht, so erhitzt sich der Widerstandsdraht. Die Heizung kann eine Röhrenheizung sein, also Röhren für ein Heizen umfassen. Die Heizung kann in einer Ausführungsform eine Dickschichtheizung sein.

Vorzugsweise wird ein Nahrungsmittel im Schnellkochtopf zunächst mit maximal möglicher Temperatur zubereitet. Zu einem späteren Zeitpunkt wird der Schnellkochtopf vor dem Ende der Garzeit von dem Basisgerät so getrennt, dass das Basisgerät für eine andere Zubereitung eines Nahrungsmittels mit einem anderen Zubereitungsgefäß genutzt werden kann. Nach dem Trennen des Schnellkochtopfs von dem Basisgerät wird in einer Ausgestaltung des Verfahrens ein weiteres Nahrungsmittel mit einem anderen Zubereitungsgefäß und dem Basisgerät zubereitet. Ein Benutzer kann dann beispielsweise das Basisgerät für die Zubereitung von Saucen, Pasten, Nachtisch usw. nutzen.

Durch die Erfindung wird es möglich, dass die Zubereitung von verschiedenen Nahrungsmitteln, die parallel zubereitet werden, synchronisiert werden können. Beispielsweise ist ein Brot in einen Backofen geschoben und eine Backzeit von einer halben Stunde eingestellt worden. Außerdem soll Gulasch im Schnellkochtopf zubereitet werden. Es wird dann in das System eingegeben, dass das Gulasch ebenfalls nach 30 Minuten fertig sein soll. Beide Nahrungsmittel werden dann gleichzeitig fertig. Zur Erfindung gehört also auch, dass zwei verschiedene Nahrungsmittel parallel zubereitet werden. Zwei verschiedene Nahrungsmittel können in zwei verschiedenen Zubereitungsgefäßen zubereitet werden.

Durch die Erfindung kann ausgenutzt werden, dass in einem aufgeheizten Schnellkochtopf potentielle und thermische Energie gespeichert wird, die sich nutzen lässt, um losgelöst von einer kontinuierlichen Energieversorgung Nahrungsmittel zu garen. Es wird dann ein Schnellkochtopf nebst Inhalt durch eine Energiequelle einmalig mit einer Initialenergie aufgeladen, um dann passiv und unabhängig von der Energiequelle weiterzugaren.

Im Fall eines Schnellkochtopfes kann besonders gut ausgenutzt werden, dass die Garzeit exponentiell von der Temperatur abhängig ist. Der Schnellkochtopf kann eine integrierte Heizung umfassen oder er wird indirekt (z.B. durch Induktion) erhitzt.

Die Erfindung ermöglicht ein passives Weitergaren im Zubereitungsgefäß an beliebigen Orten und damit dort, wo im Haushalt Platz ist, also auch außerhalb der Küche wie zum Beispiel im Garten, Wohnzimmer oder Esstisch. In Abhängigkeit der Nahrungsmittelart, des Nahrungsmittelgewichts und der zur Verfügung stehenden Kochzeit kann eine Strategie gewählt werden, um ein Nahrungsmittel in einer vorgegebenen Zeit zu garen. Hierbei stehen verschiedene Strategien zur Verfügung. Beispiele dafür werden nachfolgend anhand von Figuren erläutert. Die vorgegebene Zeit kann entweder vom Benutzer vorgegeben sein oder aber aus dem Kontext einer Zubereitung eines Menus, das aus mehreren zubereiteten Nahrungsmitteln besteht, abgeleitet werden.

Beispielsweise möchte ein Benutzer ein Menü zubereiten. Für die Zubereitung steht dem Benutzer unter anderem das erfindungsgemäße System mit einem Küchengerät zur Verfügung, welches ein Basisgerät und einen Schnellkochtopf umfasst. Das Basisgerät kann den Schnellkochtopf erhitzen. Der Schnellkochtopf kann integrierte Widerstandsheizelemente umfassen, die über das Basisgerät mit Strom versorgt werden können. Werden die Widerstandsheizelemente mit Strom versorgt, so wird der Schnellkochtopf erhitzt. Das Basisgerät kann außerdem einen Motor umfassen, mit dem ein Misch- und/ oder Schneidwerkzeug eines zweiten Zubereitungsgefäßes angetrieben werden kann. Das Misch- und/ oder Schneidwerkzeug kann sich im zweiten Zubereitungsgefäß befinden. Die Welle des Misch- und/ oder Schneidwerkzeugs kann mit der Welle des Motors drehfest verbunden werden, wenn das zweite Zubereitungsgefäß auf das Basisgerät gesetzt wird. Es kann dann eine Drehbewegung der Welle des Motors auf das Misch- und/oder Schneidwerkzeug übertragen werden. Das zweite Zubereitungsgefäß kann ebenfalls integrierte Widerstandsheizelemente umfassen, die durch das Basisgerät mit Strom versorgt werden können. Auch das zweite Zubereitungsgefäß kann also erhitzt werden. Das Basisgerät kann eine Ausnehmung aufweisen, in welche wahlweise der Schnellkochtopf oder das zweite Zubereitungsgefäß eingesetzt werden können.

Das Basisgerät kann einen Schließmechanismus umfassen, mit dem ein Deckel für den Schnellkochtopf und/oder für das zweite Speisenzubereitungsgefäß verriegelt werden kann. Der Schließmechanismus kann beispielsweise zwei Arme umfassen, die zwischen einer Verriegelungsstellung und einer Öffnungsstellung verschwenkt oder hin und her gedreht werden können. In der Verriegelungsstellung ist ein Deckel druckfest mit dem ausgewählten Zubereitungsgefäß verbunden. In der Öffnungsstellung kann der Deckel vom ausgewählten Zubereitungsgefäß beispielsweise entfernt werden. Der Deckel für den Schnellkochtopf ist vollständig geschlossen. Es ist aber zu bevorzugen, dass der Deckel für den Schnellkochtopf auch unabhängig von dem Schließmechanismus druckfest mit dem Zubereitungsgefäß verbunden sein kann. Es ist dann möglich, nach Öffnen des Schließmechanismus den Schnellkochtopf zu jeder Zeit von dem Basisgerät zu trennen, um ein optimiertes passives Weitergaren auch unabhängig von dem Basisgerät zu ermöglichen.

Der Deckel für das zweite Zubereitungsgefäß kann eine Öffnung aufweisen, über die Zutaten in das Zubereitungsgefäß auch dann hineingebracht werden können, wenn der Deckel mit dem zweiten Zubereitungsgefäß verbunden ist. Es kann ein Verschlussmittel für die Öffnung geben, welches als Spritzschutz dienen kann. Das Verschlussmittel kann ein Messbecher sein oder umfassen.

Das Menu kann ein elektronisch gespeichertes Menu mit verschiedenen Rezepten zur Zubereitung von verschiedenen Nahrungsmitteln wie Fleisch, Gemüse und Kartoffeln sein, auf welches das Basisgerät für eine halbautomatisierte Zubereitung zugreifen kann. Das Menu kann vom Benutzer individuell zusammengestellt worden sein.

Mit dem Ziel, alle Nahrungsmittel gleichzeitig fertiggegart zu haben, kann das System durch Variation von Kochparametern wie z.B. Druck und/oder Temperatur die Zubereitungszeit von einzelnen Nahrungsmitteln entsprechend anpassen. Wobei der Druck ggf. auch über die Temperatur geregelt werden kann. Durch die Erfindung kann das Basisgerät mehrfach mit den unterschiedlichen Zubereitungsgefäßen genutzt werden. So kann das Basisgerät beispielsweise zunächst dafür genutzt werden, um Risotto in dem Schnellkochtopf zuzubereiten. Zu einem geeigneten Zeitpunkt vor Ablauf der Garzeit kann der Schnellkochtopf vom Basisgerät getrennt werden. Zum Beispiel ein Salat oder eine Bowle kann im Anschluss daran im zweiten Zubereitungsgefäß zubereitet werden, während das Nahrungsmittel im Schnellkochtopf zu Ende gegart wird. Es können Schmorgerichte wie Gulasch, Tafelspitz, ganzes Hähnchen oder Schmorbraten zubereitet werden. Vor Ablauf der Garzeit kann der Schnellkochtopf für ein passives Weitergaren vom Basisgerät getrennt werden. Während der Zeit des passiven Weitergarens im Schnellkochtopf können in einem zweiten Zubereitungsgefäß auf der Basisstation weitere Beilagen wie Kartoffeln oder andere Gemüsearten gekocht oder gedünstet werden.

Es ist auch möglich, dass die Zubereitung durch die Steuerungseinrichtung so gesteuert wird, dass die Zubereitung ein passives Weitergaren umfasst, dies aber für eine vollständige Zubereitung aufgrund eines zu starken Temperaturabfalls nicht ausreicht. Es muss dann das Zubereitungsgefäß, so zum Beispiel ein Schnellkochtopf erneut erhitzt werden. Dies kann von Interesse sein, wenn ein Basisgerät zwischendurch für die Zubereitung eines anderen Nahrungsmittels benötigt wird. Beispielsweise wird im Schnellkochtopf durch Zufuhr von Energie durch ein Basisgerät zunächst Hähnchen oder Rind gedämpft. Der Schnellkochtopf wird von dem Basisgerät vor Ablauf der Garzeit getrennt. Die Wärmespeicherfähigkeit des Schnellkochtopfes reicht allerdings nicht aus, um das Nahrungsmittel fertig zu garen. Das Basisgerät kann nun beispielsweise für die Zubereitung von Zutaten für eine Bowl genutzt werden. Es kann nun beispielsweise Gemüse zerkleinert werden. Es kann nun beispielsweise eine Soße zubereitet werden. Ist die Zubereitung der Zutaten auf dem Basisgerät abgeschlossen, so kann nun das Hähnchen oder Rind mithilfe der Basisstation fertig gegart werden. Die Steuerungseinrichtung kann also so eingerichtet sein, dass diese die Zubereitung auch so steuern kann, dass zwischendurch passiv weitergegart wird.

Die Wärmespeicherfähigkeit eines Schnellkochtopfes kann von einer Wassermenge abhängen, die sich im Schnellkochtopf für eine Zubereitung befindet. Die Steuerungseinrichtung kann daher so eingerichtet sein, dass diese eine Wassermenge vorgeben kann, die in einen Schnellkochtopf einzufüllen ist. Auch durch Vorgabe von Wassermengen kann die Steuerungseinrichtung daher Zeiten für ein passives Weitergaren steuern oder zumindest Einfluss darauf nehmen.

Beispielsweise möchte ein Benutzer nicht nur eine Speise zubereiten, sondern parallel dazu auch anders aktiv werden wie zum Beispiel Rasenmähen, Kinder abholen oder zum Sport bringen. Die für die parallele Aktivität benötigte Zeit entspricht nicht der standardmäßig vorgesehenen Zubereitungszeit, während der ein Benutzer abwesend sein kann. In diesem Fall kann das System durch Variation von Kochparametern wie z.B. Druck, Temperatur und/oder durch den Zeitpunkt einer automatisierten Energieabschaltung die Zubereitungszeit entsprechend anpassen, so zum Beispiel verlängern oder verkürzen. Dies ist für einzelne Nahrungsmittel möglich. Das System kann aber auch eine Mehrzahl von Küchengeräten umfassen, so dass dies auch für die Zubereitung von Menüs möglich ist. Es kann so beispielsweise ein Menu zubereitet werden, das eine Gulaschsuppe und ein Risotto umfasst.

Eine Überwachung von Temperaturen im Speisenzubereitungsgefäß des Systems kann kontinuierlich durchgeführt werden. Das Speisenzubereitungsgefäß kann also so eingerichtet sein, dass eine Temperaturüberwachung auch dann noch möglich ist, wenn das Speisenzubereitungsgefäß von seinem Basisgerät getrennt worden ist. Das Speisenzubereitungsgefäß kann beispielsweise eine Temperaturmesseinrichtung und eine Funkeinheit umfassen, um gemessene Temperaturen jederzeit zumindest drahtlos beispielsweise an die Steuerungseinrichtung zwecks Temperaturüberwachung senden zu können. Eine kontinuierliche Temperaturüberwachung ist aber nicht notwendig. Diese kann insbesondere dann entfallen, wenn das Speisenzubereitungsgefäß von seinem Basisgerät getrennt worden ist.

Ein Nahrungsmittel kann mit dem System auch in Übereinstimmung mit einer üblichen Vorgehensweise zubereitet werden. Ist das Zubereitungsgefäß ein Schnellkochtopf, so können der Druck und die Temperatur maximal sein, bis das Nahrungsmittel fertig zubereitet worden ist. In diesem Fall kann von einem Benutzer als Zubereitungszeit ausgewählt worden sein, dass das Nahrungsmittel so schnell wie möglich zubereitet werden soll. Alternativ kann die Steuerungseinrichtung die Zubereitung so steuern, dass immer so schnell wie möglich zubereitet werden soll, wenn keine andere Zubereitungszeit ausgewählt worden ist. Das Ende einer Garzeit kann durch die Steuerungseinrichtung beispielsweise optisch über ein Display und/oder akustisch über einen Lautsprecher signalisiert werden, um ein Nahrungsmittel optimal zuzubereiten. Es können also beispielsweise Schmorgerichte wie Gulasch oder Tafelspitz gesteuert so schnell wie möglich zubereitet werden.

Ist das Nahrungsmittel nicht für den Druck geeignet, der mit dem Schnellkochtopf maximal möglich ist, so wird die Obergrenze für den Druck durch das Nahrungsmittel vorgegeben. Wurde durch den Benutzer dieses Nahrungsmittel ausgewählt und in das System eingegeben, so steuert die Steuerungseinrichtung den Druck entsprechend. Diese Steuerung kann wiederum auf Erfahrungswerten beruhen, die in einer Datenbank hinterlegt sind und auf die die Steuerungseinrichtung zugreifen kann. Auch in einem solchen Fall trägt die Steuerung dazu bei, ein Nahrungsmittel sehr zuverlässig optimal zuzubereiten.

Die Steuerungseinrichtung kann so eingerichtet sein, dass diese die Temperatur im Zubereitungsgefäß im Laufe einer Zubereitung verändern kann. Dies kann geschehen, wenn während der Zubereitung von einem Benutzer die Zubereitungszeit verändert wird. So kann die Temperatur durch die Steuerungseinrichtung geeignet gesenkt werden, wenn ein Benutzer im Laufe einer Zubereitung die Zubereitungszeit verlängert. Die Temperatur kann durch die Steuerungseinrichtung geeignet erhöht werden, wenn ein Benutzer im Laufe einer Zubereitung die Zubereitungszeit verkürzt. Die Steuerungseinrichtung verändert die Temperatur im Zubereitungsgefäß im Laufe einer Zubereitung entweder vollautomatisch oder aber halbautomatisch durch Anweisung an einen Nutzer, manuell eine Heizleistung zu verändern. Es kann ein elektronisch gespeichertes Rezept bereitgestellt sein, auf welches die Steuerungseinrichtung für ein Steuern bzw. Verändern der Temperatur zugreifen kann. Das Rezept enthält dann also Angaben zu ein oder mehreren Temperaturen.

Die Steuerungseinrichtung kann so eingerichtet sein, dass diese die Temperatur im Zubereitungsgefäß im Laufe einer Zubereitung verändern kann und außerdem von der Steuerungseinrichtung vorgesehen ist, dass ein Zubereitungsgefäß vollständig von einem Basisgerät für ein passives Weitergaren getrennt wird und/oder ein Erhitzen des Zubereitungsgefäß vollständig abgeschaltet wird.

Die Steuerungseinrichtung kann so eingerichtet sein, dass diese die Temperatur in einem Zubereitungsgefäß so steuert, dass die Siedetemperatur von Wasser nicht überschritten wird. Dies gilt insbesondere auch für den Fall, dass das Zubereitungsgefäß ein Schnellkochtopf ist. Dies kann beispielsweise dann sein, wenn ein Benutzer über eine Eingabeeinrichtung des Systems eingegeben hat, dass ein Nahrungsmittel besonders schonend zubereitet werden soll.

Nahrungsmittel werden durch die Erfindung beispielsweise wie folgt zubereitet.

Im Schnellkochtopf soll ein Nahrungsmittel wie zum Beispiel Gulaschsuppe hergestellt werden.

Wenn ein Benutzer auswählt, dass die Gulaschsuppe so schnell wie möglich hergestellt werden soll, wird von der Steuerungseinrichtung die maximal mögliche Temperatur ausgewählt und in einer Ausgestaltung automatisiert eingestellt. Der Benutzer kann alternativ von der Steuerungseinrichtung eine Anweisung erhalten, die ausgewählte Temperatur manuell einzustellen. Der Druck im Schnellkochtopf wird damit maximiert. Wird das Ende der Garzeit erreicht, so kann die Steuerungseinrichtung dies beispielsweise akustisch und/oder optisch signalisieren.

Wenn ein Benutzer auswählt, dass die Gulaschsuppe so langsam wie möglich hergestellt werden soll, wird von der Steuerungseinrichtung eine minimal vorgesehene Temperatur ausgewählt. Diese kann im Fall von Gulasch beispielsweise 100°C betragen. Bei einem dafür geeigneten anderen Nahrungsmittel kann die Temperatur aber auch lediglich 75°C betragen. Eine minimale Temperatur liegt also in der Regel zwischen 75°C und 100°C.

Wenn ein Benutzer auswählt, dass die Gulaschsuppe innerhalb einer Zeit hergestellt werden soll, die zwischen der minimal und der maximal möglichen Zeit liegt, dann kann von der Steuerungseinrichtung zunächst eine maximal vorgesehene Temperatur ausgewählt werden oder eine Temperatur, die zwischen der maximal und der minimal möglichen Temperatur liegt. Zu einem späteren Zeitpunkt kann die Steuerungseinrichtung die Temperatur entweder reduzieren oder das Erhitzen des Schnellkochtopfs beenden. Alternativ kann die Steuerungseinrichtung zu einem späteren Zeitpunkt die Temperatur zunächst reduzieren und zeitlich danach das Erhitzen des Schnellkochtopfs beenden.

Wenn ein Benutzer auswählt, dass die Gulaschsuppe innerhalb einer Zeit hergestellt werden soll, die nahe bei der minimal möglichen Zeit liegt, dann kann von der Steuerungseinrichtung zunächst eine maximal vorgesehene Temperatur ausgewählt werden. Zu einem späteren Zeitpunkt kann die Steuerungseinrichtung das Erhitzen des Schnellkochtopfs beenden. Wählt ein Benutzer während der Zubereitung eine längere Zeit aus, so kann die Steuerungseinrichtung die Temperatur zu einem geeigneten Zeitpunkt zunächst reduzieren.

Wenn ein Benutzer auswählt, dass die Gulaschsuppe innerhalb einer Zeit hergestellt werden soll, die nahe bei der maximal möglichen Zeit liegt, dann kann von der Steuerungseinrichtung zunächst eine Temperatur ausgewählt werden, die zwischen der minimal möglichen und der maximal möglichen Temperatur liegt. Zu einem späteren Zeitpunkt kann die Steuerungseinrichtung das Erhitzen des Schnellkochtopfs beenden. Wählt ein Benutzer während der Zubereitung eine längere Zeit aus, so kann die Steuerungseinrichtung die Temperatur zu einem geeigneten Zeitpunkt zunächst reduzieren. Wählt ein Benutzer während der Zubereitung eine kürzere Zeit aus, so kann die Steuerungseinrichtung die Temperatur zu einem geeigneten Zeitpunkt zunächst erhöhen.

Beispielsweise soll ein Menu zubereitet werden, welches mehrere Nahrungsmittel umfasst. Die Nahrungsmittel des Menus sollen gleichzeitig fertig werden. Zur Verfügung steht ein Basisgerät für den Betrieb des Schnellkochtopfs und für den Betrieb eines zweiten Zubereitungsgefäßes. Das zweite Zubereitungsgefäß umfasst ein Misch- und Schneidwerkzeug. Beispielsweise sollen ein Risotto und ein Salat zubereitet werden. Die Steuerungseinrichtung kann die Zubereitung nun wie folgt steuern. Zunächst wird das Risotto im Schnellkochtopf mit maximal möglicher Temperatur zubereitet. Zu einer gegebenen Zeit vor Ablauf der Garzeit wird der Schnellkochtopf von dem Basisgerät entfernt. Mit dem zweiten Zubereitungsgefäß und dem Basisgerät wird der Salat zubereitet, indem Salatbestandteile im zweiten Zubereitungsgefäß ggfs. zerkleinert und gemischt werden. Die Steuerungseinrichtung steuert die Zubereitung so, dass mit Fertigstellung des Salats das Risotto fertig gegart und warm ist. Das Risotto ist also weder übergart noch untergart. Soll der Salat beispielsweise lauwarm sein, dann steuert die Steuerungseinrichtung die Temperatur im zweiten Zubereitungsgefäß entsprechend.

Für die Zubereitung eines Menus kann auch vorgesehen sein, dass der Schnellkochtopf vorrübergehend von dem Basisgerät getrennt wird, um auch zwischendurch das Basisgerät für andere Zwecke einsetzen zu können. Dies ist regelmäßig dann der Fall, wenn eine große Anzahl an Arbeitsschritten durchgeführt werden müssen und/oder das zweite Zubereitungsgefäß relativ lange benötigt wird. Im Fall von Bowl-Rezepten ("bunte Schüsselgerichte", "gemischte Schüsselgerichte") kann dies erforderlich sein.

Die Temperaturen sowie das Beenden des Erhitzens können von der Steuerungseinrichtung automatisiert eingestellt werden. Der Benutzer kann von der Steuerungseinrichtung alternativ Anweisungen erhalten, die ausgewählten Temperaturen manuell einzustellen, beispielsweise eine für das Erhitzen vorgesehene Heizung auszuschalten oder den Schnellkochtopf von einem Basisgerät zu trennen, um so das Erhitzen zu beenden. Wird das Ende der Garzeit erreicht, so kann die Steuerungseinrichtung dies beispielsweise akustisch und/oder optisch signalisieren. Dies kann umfassen, dass eine Benachrichtigung an ein Mobiltelefon des Benutzers gesendet wird.

Die Erfindung ermöglicht eine automatisierte Wahl einer Strategie, um vorgegebene Kochzeiten (Fertigstellungszeit-punkt/-fenster) einzuhalten. Ein Benutzer kann angeleitet werden, um das Gelingen einer Zubereitung sicherzustellen. Die Zubereitung von mehreren Nahrungsmitteln kann automatisiert synchronisiert werden. In gewissen Grenzen können Wunsch-Garzeiten automatisiert eingehalten werden.

Durch die Erfindung kann energieeffizient gekocht werden. Restwärmen können optimal genutzt werden. Der Komfort für einen Benutzer wird verbessert.

Nachfolgend wird die Erfindung mithilfe von Figuren näher erläutert.
- Figur 1: zeigt ein System mit Basisgerät und Schnellkochtopf.
- Figur 2: zeigt das Basisgerät mit einem zweiten Zubereitungsgefäß.
- Figur 3: zeigt einen gesteuerten ersten zeitlichen Temperaturverlauf in einem Schnellkochtopf.
- Figur 4: zeigt einen gesteuerten zweiten zeitlichen Temperaturverlauf in einem Schnellkochtopf.
- Figur 5: zeigt einen gesteuerten dritten zeitlichen Temperaturverlauf in einem Schnellkochtopf.
- Figur 6: zeigt einen gesteuerten vierten zeitlichen Temperaturverlauf in einem Schnellkochtopf.
- Figur 7: zeigt einen gesteuerten fünften zeitlichen Temperaturverlauf in einem Schnellkochtopf.

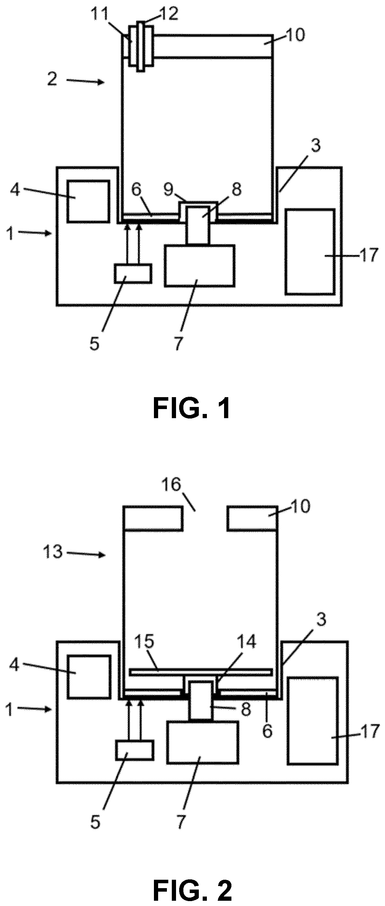

Die Figur 1 zeigt ein Basisgerät 1 mit einem Schnellkochtopf 2. Der Schnellkochtopf 2 ist in eine Ausnehmung 3 des Basisgeräts 1 eingesetzt. Das Basisgerät 1 umfasst eine Steuerungseinrichtung 4, mit der eine Zubereitung eines Nahrungsmittels gesteuert werden kann. Das Basisgerät umfasst eine Stromzuführungseinrichtung 5, über die elektrischer Strom zu einer integrierten Heizung 6 im Schnellkochtopf 2 zugeführt werden kann. Die Steuerungseinrichtung 4 kann die Zuführung von Strom durch die Stromzuführungseinrichtung 5 steuern. Das Basisgerät 1 umfasst einen Elektromotor 7 mit einer Welle 8, die in die Ausnehmung 3 hineinreicht. Der Schnellkochtopf 2 umfasst an seiner Unterseite eine Aussparung 9, in die die Welle 8 hineinreicht, wenn der Schnellkochtopf 2 in die Ausnehmung 3 eingesetzt ist. Der Schnellkochtopf 2 umfasst einen druckfest angebrachten Deckel 10. Der Deckel 10 ist lösbar angebracht. Im Deckel 10 gibt es ein Ventil 11 mit einem Stift 12. Der Stift 12 wird in Abhängigkeit vom Druck, der im Schnellkochtopf 2 herrscht, nach oben und/oder nach unten bewegt. Es kann so der Druck im Schnellkochtopf 2 angezeigt werden. Außerdem öffnet das Ventil 11, wenn ein übermäßig hoher Druck im Schnellkochtopf 2 auftritt. Ein unzulässig hoher Druck im Schnellkochtopf 2 kann so vermieden werden.

Der in der Figur 1 gezeigte Schnellkochtopf 2 kann aber auch ein Misch- und/oder Schneidwerkzeug umfassen, wie dies in der nachfolgend beschriebenen Figur 2 für ein zweites Zubereitungsgefäß gezeigt wird.

Die Figur 2 zeigt das Basisgerät 1 mit einem zweiten Zubereitungsgefäß 13. Das zweite Zubereitungsgefäß 13 ist in die Ausnehmung 3 des Basisgeräts 1 eingesetzt. Über die Stromzuführungseinrichtung 5 kann elektrischer Strom zu der integrierten Heizung 6 im zweiten Zubereitungsgefäß 13 zugeführt werden. Die Welle 8 reicht in das zweite Zubereitungsgefäß 13 hinein. Das zweite Zubereitungsgefäß 13 umfasst eine Welle 14 mit einem daran angebrachten Misch- und/oder Schneidwerkzeug 15. Die Welle 8 ist mit der Welle 14 des zweiten Zubereitungsgefäßes 13 drehfest verbunden worden. Der Elektromotor 8 kann daher das Misch- und/oder Schneidwerkzeug 15 antreiben. Die Drehgeschwindigkeit des Elektromotors 8 und damit die Drehgeschwindigkeit des Misch- und/oder Schneidwerkzeugs 15 können durch die Steuerungseinrichtung 5 gesteuert werden.

Der Deckel 10 des zweiten Zubereitungsgefäßes 13 kann eine Öffnung 16 aufweisen, über die Zutaten in das zweite Zubereitungsgefäß 13 auch während der Zubereitung eines Nahrungsmittels eingefüllt werden können.

Das Basisgerät kann ein berührungsempfindliches Display 17 als Nutzerschnittstelle aufweisen. Über das berührungsempfindliche Display 17 können Eingaben getätigt werden. Über das berührungsempfindliche Display 17 kann das Küchengerät Informationen an einen Nutzer ausgegeben.

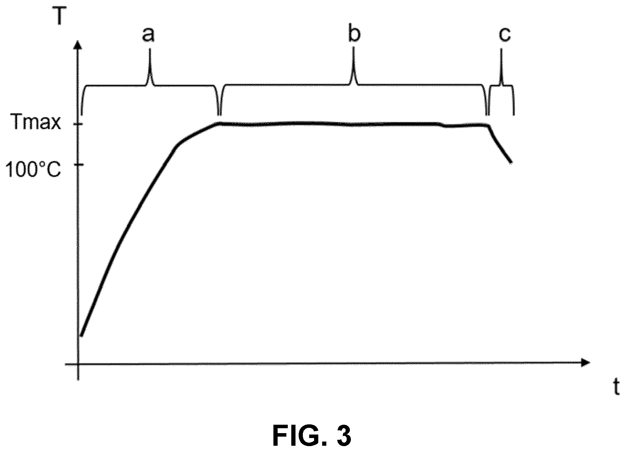

Die Figur 3 verdeutlicht eine erste gesteuerte Zubereitung eines Nahrungsmittels im Schnellkochtopf 2. Aufgetragen ist die Temperatur T gegenüber der Zeit t. Zunächst steigt die Temperatur im Schnellkochtopf 2 während eines Zeitraums a an, bis die maximale Temperatur Tmax und damit auch der maximale Druck pmax im Schnellkochtopf 2 erreicht ist. Während des Zeitraums b wird die maximale Temperatur Tmax aufrechterhalten. Das Nahrungsmittel im Schnellkochtopf 2 ist im Zeitraum b vollständig gegart worden. Es ist also fertig zubereitet worden und zwar so schnell wie möglich. Über das Ventil 11 des Schnellkochtopfs 2 wird nun der Schnellkochtopf entlüftet und so mit maximaler Geschwindigkeit auf Atmosphärendruck gebracht. Im Anschluss daran kann der Deckel 10 des Schnellkochtopfs 2 entfernt und das Nahrungsmittel entnommen werden. Der Schnellkochtopf kann während dieser Zubereitung immer in der Ausnehmung 3 des Basisgeräts 1 eingesetzt sein. Der Schnellkochtopf 2 muss also nie von dem Basisgerät 1 getrennt werden.

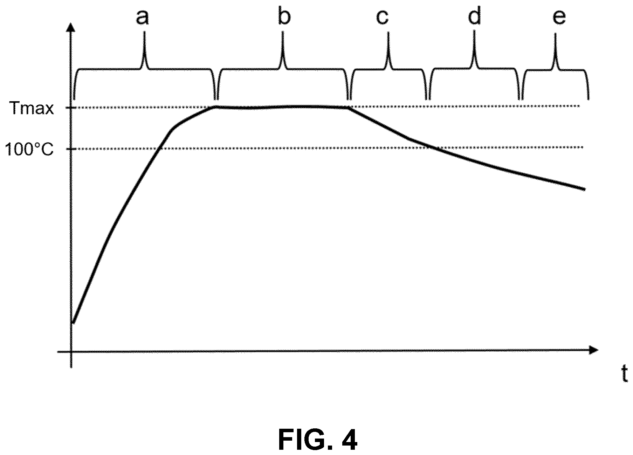

Die Figur 4 verdeutlicht eine zweite gesteuerte Zubereitung eines Nahrungsmittels im Schnellkochtopf 2. Aufgetragen ist die Temperatur T gegenüber der Zeit t. Zunächst steigt die Temperatur im Schnellkochtopf 2 während eines Zeitraums a an, bis die maximale Temperatur Tmax und damit auch der maximale Druck pmax im Schnellkochtopf 2 erreicht ist. Während des Zeitraums b wird die maximale Temperatur Tmax aufrechterhalten. Im Anschluss an den Zeitraum b wird der Schnellkochtopf 2 von dem Basisgerät 1 getrennt und daher nicht mehr aktiv erhitzt. Das Nahrungsmittel im Schnellkochtopf 2 ist noch nicht fertig gegart worden. Es schließt sich nun ein Zeitraum c an. Der Zeitraum c endet, wenn im Schnellkochtopf 2 durch Abkühlen der Atmosphärendruck erreicht ist. Die Steuerungseinrichtung hat das Trennen des Schnellkochtopfs 2 vom Basisgerät 1 so gesteuert, dass das Nahrungsmittel nach Erreichen des Endes des Zeitraums c fertig gegart ist. Der Benutzer kann das Ende der Garzeit zum Beispiel daran erkennen, dass der Stift 12 das Erreichen des Atmosphärendrucks anzeigt. Der Schnellkochtopf 2 kann so eingerichtet sein, dass der Deckel 10 erst gelöst werden kann, wenn Atmosphärendruck erreicht ist. Der Benutzer ist bei dieser Ausgestaltung vorteilhaft daran gehindert, dass er vor dem Ende der Garzeit den Deckel 10 entfernen und so das Garen vorzeitig beenden kann. Der Benutzer kann das Ende der Garzeit also dann daran erkennen, dass der Deckel 10 entfernt werden kann.

Nach Erreichen des Endes des Zeitraums c kann der Deckel 10 vom Schnellkochtopf 2 sofort entfernt und das dann optimal zubereitete Nahrungsmittel gegessen oder weiterverarbeitet werden. Das Nahrungsmittel kann aber noch für einen Zeitraum d im Schnellkochtopf 2 verbleiben, ohne zu stark gegart zu werden. Wird allerdings der Zeitraum e erreicht, so ist das Nahrungsmittel im Schnellkochtopf 2 zu stark gegart worden. Das Nahrungsmittel sollte daher vor Erreichen des Zeitraums e beispielsweise aus dem Schnellkochtopf 2 entfernt und gegessen werden.

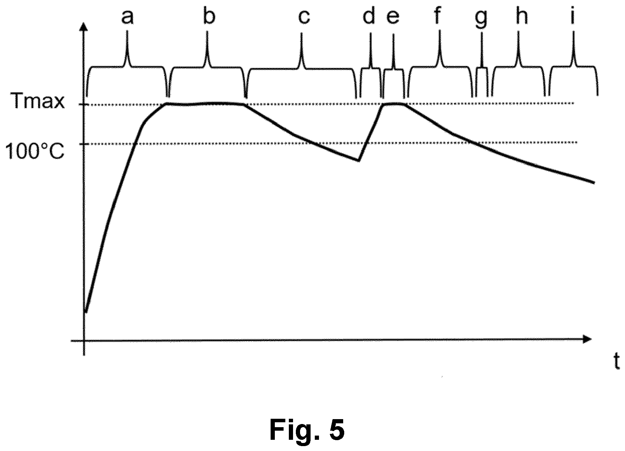

Die Figur 5 verdeutlicht eine dritte gesteuerte Zubereitung eines Nahrungsmittels im Schnellkochtopf 2. Aufgetragen ist die Temperatur T gegenüber der Zeit t. Zunächst steigt die Temperatur im Schnellkochtopf 2 während eines Zeitraums a an, bis die maximale Temperatur Tmax und damit auch der maximale Druck pmax im Schnellkochtopf 2 erreicht ist. Während des Zeitraums b wird die maximale Temperatur Tmax aufrechterhalten. Im Anschluss an den Zeitraum b wird der Schnellkochtopf 2 von dem Basisgerät 1 getrennt und daher nicht mehr aktiv erhitzt. Das Nahrungsmittel im Schnellkochtopf 2 ist noch nicht fertig gegart worden. Es schließt sich nun ein Zeitraum c an. Innerhalb des Zeitraums c kühlt der Schnellkochtopf 2 auf unter 100°C ab. Eine vollständige Zubereitung durch passives Weitergaren ist nicht möglich. Der Schnellkochtopf 2 wird daher wieder in die Ausnehmung 3 des Basisgeräts 1 eingesetzt. Der Schnellkochtopf 2 wird innerhalb des Zeitraums d wieder auf maximale Temperatur gebracht. Die maximale Temperatur wird anschließend während eines Zeitraums e aufrechterhalten. Danach wird der Schnellkochtopf für ein passives Weitergaren wieder vom Basisgerät 1 getrennt. Ein sich an den Zeitraum e anschließender Zeitraum f endet, wenn im Schnellkochtopf 2 durch Abkühlen der Atmosphärendruck erreicht ist. Es wird allerdings noch ein sich daran anschließender Zeitraum g benötigt, um das Nahrungsmittel fertig zu garen. Das Nahrungsmittel kann nun noch für einen Zeitraum h im Schnellkochtopf 2 verbleiben, ohne zu sehr gegart zu werden. Wird allerdings der Zeitraum i erreicht, so ist das Nahrungsmittel im Schnellkochtopf 2 zu sehr gegart worden. Das Nahrungsmittel sollte daher vor Erreichen des Zeitraums i beispielsweise aus dem Schnellkochtopf 2 entfernt und gegessen werden.

Diese Steuerung der Zubereitungszeit ist mit dem Vorteil verbunden, dass mehrere Zeiträume zur Verfügung stehen, um das Basisgerät anderweitig nutzen zu können. Auch ist der für ein abschließendes passives Weitergaren zur Verfügung stehende Zeitraum f und h besonders lang. Allerdings ist für den Benutzer dann das Ende der Garzeit schwieriger zu erkennen. Insbesondere in einem solchen Fall kann die Steuerungseinrichtung 4 so eingerichtet sein, dass diese den Benutzer über das Erreichen des Endes der Garzeit informiert, so zum Beispiel akustisch und/oder optisch über ein Display. Dies kann umfassen, dass eine Benachrichtigung an ein Mobiltelefon des Benutzers gesendet wird.

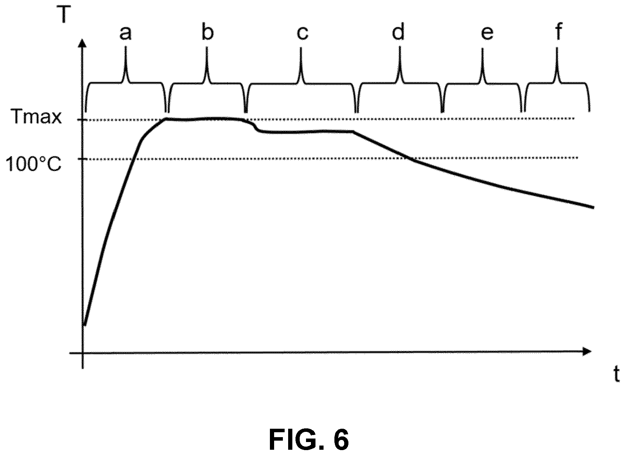

Die Figur 6 verdeutlicht eine vierte gesteuerte Zubereitung eines Nahrungsmittels im Schnellkochtopf 2. Aufgetragen ist die Temperatur T gegenüber der Zeit t. Zunächst steigt die Temperatur im Schnellkochtopf 2 während eines Zeitraums a an, bis die maximale Temperatur Tmax und damit auch der maximale Druck pmax im Schnellkochtopf 2 erreicht ist. Während des Zeitraums b wird die maximale Temperatur aufrechterhalten. Im Anschluss an den Zeitraum b steuert die Steuerungseinrichtung 4 die Stromzuführeinrichtung 5 so, dass die Zufuhr von Strom zur integrierten Heizung 6 reduziert wird. Die Temperatur im Schnellkochtopf 2 sinkt. Durch diese Reduzierung des Stroms bleibt die Temperatur im Schnellkochtopf zwar immer noch über 100°C. Die maximal mögliche Temperatur Tmax wird aber nicht mehr erreicht. Damit wird ein im Schnellkochtopf befindliches Nahrungsmittel nicht länger so schnell wie möglich gegart und damit so schnell wie möglich zubereitet. Diese Temperatur wird im Zeitraum c gehalten. Im Anschluss an den Zeitraum c schaltet die Steuerungseinrichtung 4 vor Ablauf der Garzeit die Stromzuführeinrichtung 5 ab. Die integrierte Heizung 6 erhitzt daher nicht mehr den Schnellkochtopf 2. Es schließt sich nun ein Zeitraum d an. Innerhalb des Zeitraums d wird das Nahrungsmittel fertig gegart. Der Schnellkochtopf 2 kühlt während des Zeitraums d auf unter 100°C ab. Das Nahrungsmittel kann nun noch für einen Zeitraum e im Schnellkochtopf 2 verbleiben, ohne zu sehr gegart zu werden. Wird allerdings der Zeitraum f erreicht, so ist das Nahrungsmittel im Schnellkochtopf 2 zu sehr gegart worden. Das Nahrungsmittel sollte daher vor Erreichen des Zeitraums f beispielsweise aus dem Schnellkochtopf 2 entfernt und gegessen werden.

Die Figur 6 zeigt eine mögliche Steuerung, um ein Nahrungsmittel zu einer gewünschten Zeit fertigzustellen, die nach der schnellstmöglichen Zeit endet. Beispielsweise kann ein Benutzer eine längere Zubereitungszeit eingestellt haben, als der Zeitraum b endete. In Reaktion auf diese Änderung kann die Steuerungseinrichtung 4 zunächst die Temperatur abgeschaltet und nach Ablauf des Zeitraums c die Stromzufuhr zur Heizung 6 vollständig beendet haben, um die Zubereitung des Nahrungsmittels zu verzögern.

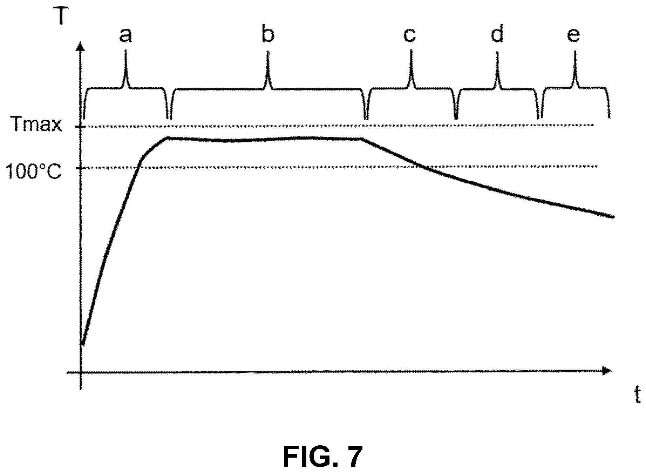

Die Figur 7 verdeutlicht eine fünfte gesteuerte Zubereitung eines Nahrungsmittels im Schnellkochtopf 2. Aufgetragen ist die Temperatur T gegenüber der Zeit t. Zunächst steigt die Temperatur im Schnellkochtopf 2 während eines Zeitraums a an, bis eine Temperatur erreicht ist, die mehr als 100°C beträgt. Die maximal mögliche Temperatur Tmax und damit der maximale Druck pmax werden im Schnellkochtopf 2 allerdings nicht erreicht. Während des Zeitraums b wird die Temperatur aufrechterhalten. Im Anschluss an den Zeitraum b schaltet die Steuerungseinrichtung 4 vor Ablauf der Garzeit die Stromzuführeinrichtung 5 ab. Die integrierte Heizung 6 erhitzt daher nicht mehr den Schnellkochtopf 2. Es schließt sich nun ein Zeitraum c an. Innerhalb des Zeitraums c wird das Nahrungsmittel fertig gegart. Der Schnellkochtopf 2 kühlt während des Zeitraums c auf unter 100°C ab. Das Nahrungsmittel kann nun noch für einen Zeitraum d im Schnellkochtopf 2 verbleiben, ohne zu sehr gegart zu werden. Wird allerdings der Zeitraum e erreicht, so ist das Nahrungsmittel im Schnellkochtopf 2 zu sehr gegart worden. Das Nahrungsmittel sollte daher vor Erreichen des Zeitraums e beispielsweise aus dem Schnellkochtopf 2 entfernt und gegessen werden.

Die Figur 7zeigt eine mögliche Steuerung, um ein Nahrungsmittel zu einer gewünschten Zeit fertigzustellen, die nach der schnellstmöglichen Zeit endet. Beispielsweise kann ein Benutzer eine längere Zubereitungszeit von Anfang an eingestellt haben. In Reaktion auf diese Einstellung kann die Steuerungseinrichtung 4 zunächst eine Temperatur unterhalb der maximal möglichen Temperatur eingestellt und nach Ablauf des Zeitraums b die Stromzufuhr zur Heizung 6 vollständig beendet haben, um die gewünschte Garzeit zu erreichen.

Die Erfindung ermöglicht verschiedene Strategien zur Zubereitung einer Speise. Soll so schnell wie möglich zubereitet werden, dann wird der Druck während der Zubereitung im Schnellkochtopf maximiert. Soll so langsam wie möglich zubereitet werden, dann wird die Temperatur geringgehalten. Die Temperaturen können dann zum Beispiel zwischen 75°C und 100°C liegen. Es können Geschwindigkeiten eingestellt werden, die zwischen der maximal und minimal möglichen Geschwindigkeit liegen. Wird eine Geschwindigkeit gewünscht, die nahe bei der maximal möglichen Geschwindigkeit liegt, dann kann über das zum Beispiel automatisierte Ausschalten der Heizung bzw. der Heizeinrichtung gegen Ende der Zubereitung die Zubereitungszeit geringfügig verlängert werden und/oder es kann vorrübergehend die Temperatur während der Zubereitung abgesenkt werden. Wird eine Geschwindigkeit gewünscht, die nahe bei der minimal möglichen Geschwindigkeit liegt, dann kann ein geringer Überdruck im Schnellkochtopf eingestellt werden und/oder die Heizeinrichtung kann relativ früh zum Beispiel automatisiert abgeschaltet werden.

Sollen die Komponenten eines Menus gleichzeitig fertig werden, so zum Beispiel ein Risotto und ein Salat, dann kann das Risotto im Schnellkochtopf zubereitet werden. Der Schnellkochtopf kann vor dem Ende der Zubereitung von dem Basisgerät entfernt werden, um weiterzugaren und abzukühlen. Während dieser Abkühlzeit kann der Salat mit einem anderen Zubereitungsgefäß und dem Basisgerät zubereitet werden. Diese Strategie gilt auch für andere Nahrungsmittel und zwar vor allem für den Fall, dass eine der Komponenten schnell und mit einer geringen Zahl an Arbeitsschritten zubereitet werden kann und eine andere Komponente deutlich mehr Zeit benötigt.

Es kann aber auch während der Zubereitung des Risottos oder eines anderen Nahrungsmittels mit langer Zubereitungszeit der Schnellkochtopf mehrmals vom Basisgerät entfernt und wieder mit dem Basisgerät verbunden werden, um das Basisgerät mehrmals zu unterschiedlichen Zeiten für die Zubereitung anderen Komponenten nutzen zu können. Diese Strategie gilt vor allem für den Fall, dass viele weitere Arbeitsschritte für die Zubereitung von ein oder mehreren anderen Komponenten erforderlich sind.

## Patentansprüche

1. System mit einem Küchengerät zur Zubereitung eines Nahrungsmittels, mit einer Steuerungseinrichtung (4), mit einer Einrichtung für ein Auswählen einer Zubereitungszeit für Nahrungsmittel (17), wobei die Steuerungseinrichtung (4) so eingerichtet ist, dass diese die Zubereitung eines Nahrungsmittels so steuern kann, dass eine ausgewählte Zubereitungszeit eingehalten wird.

2. System nach dem vorhergehenden Anspruch, **dadurch gekennzeichnet, dass** das System eine Einrichtung für ein Eingeben eines Nahrungsmittels (17) und eine Datenbank mit elektronisch gespeicherten Informationen über Garzeiten von Nahrungsmitteln in Abhängigkeit von Temperatur und/oder Menge für das Steuern der Zubereitung des Nahrungsmittels umfasst.

3. System nach einem der vorhergehenden Ansprüche, **dadurch gekennzeichnet, dass** die Steuerungseinrichtung (4) so eingerichtet ist, dass das Steuern der Zubereitung eines Nahrungsmittels eine Ausgabe einer Anweisung für einen Nutzer umfasst.

4. System nach dem vorhergehenden Anspruch, **dadurch gekennzeichnet, dass** eine Anweisung an einen Nutzer umfasst, dass ein Zubereitungsgefäß des Küchengeräts von einem Basisgerät (1) des Küchengeräts entfernt werden soll.

5. System nach einem der vorhergehenden Ansprüche, **dadurch gekennzeichnet, dass** das Küchengerät ein Schnellkochtopf (2) ist oder einen Schnellkochtopf (2) umfasst.

6. System nach dem vorhergehenden Anspruch, **dadurch gekennzeichnet, dass** eine Heizeinrichtung in den Schnellkochtopf integriert ist.

7. System nach einem der beiden vorhergehenden Ansprüche, **dadurch gekennzeichnet, dass** die Steuerungseinrichtung (4) so eingerichtet ist, dass diese die Zubereitung einer Nahrung so steuert, dass ein Nahrungsmittel im Schnellkochtopf (2) zunächst mit maximal möglicher Temperatur zubereitet wird und zu einem späteren Zeitpunkt der Schnellkochtopf (2) von einem Basisgerät (1) getrennt wird, über welches der Schnellkochtopf (2) erhitzt wird.

8. Verfahren für eine Zubereitung eines Nahrungsmittels mit einem System nach einem der vorhergehenden Ansprüche, **dadurch gekennzeichnet, dass** eine Zubereitungszeit über die Einrichtung für ein Auswählen einer Zubereitungszeit ausgewählt wird und die Steuerungseinrichtung (4) die Zubereitung des Nahrungsmittels so steuert, dass die ausgewählte Zubereitungszeit eingehalten wird.

9. Verfahren nach dem vorhergehenden Anspruch, **dadurch gekennzeichnet, dass** ein Nahrungsmittel mithilfe der Einrichtung für ein Eingeben eines Nahrungsmittels des Systems eingegeben wird und dass das System aus der Datenbank mit den elektronisch gespeicherten Informationen über Garzeiten von Nahrungsmitteln das eingegebene Nahrungsmittel auswählt und die Zubereitung des Nahrungsmittels mithilfe der Informationen des Nahrungsmittels so steuert, dass die ausgewählte Zubereitungszeit eingehalten wird.

10. Verfahren nach einem der vorhergehenden Verfahrensansprüche, **dadurch gekennzeichnet, dass** im Rahmen der Zubereitung des Nahrungsmittels eine Anweisung für einen Nutzer optisch über ein Display (17), ein anderes optisches Element und/ oder akustisch über einen Lautsprecher ausgegeben wird.

11. Verfahren nach dem vorhergehenden Verfahrensanspruch, **dadurch gekennzeichnet, dass** die Zufuhr von Hitze zu dem Nahrungsmittel vor dem Ende der Garzeit abgeschaltet wird.

12. Verfahren nach dem vorhergehenden Verfahrensanspruch, **dadurch gekennzeichnet, dass** das Zubereitungsgefäß des Küchengeräts von einem Basisgerät des Küchengeräts vor dem Ende der Garzeit entfernt wird.

13. Verfahren nach einem der vorhergehenden Verfahrensansprüche, **dadurch gekennzeichnet, dass** das Küchengerät ein Schnellkochtopf (2) ist und dem Schnellkochtopf (2) mithilfe eines Basisgeräts (1) Hitze zugeführt wird.

14. Verfahren nach dem vorhergehenden Verfahrensanspruch, **dadurch gekennzeichnet, dass** ein Nahrungsmittel im Schnellkochtopf (2) zunächst mit maximal möglicher Temperatur zubereitet wird und zu einem späteren Zeitpunkt der Schnellkochtopf vor dem Ende der Garzeit von dem Basisgerät (1) getrennt wird.

15. Verfahren nach dem vorhergehenden Verfahrensanspruch, **dadurch gekennzeichnet, dass** nach dem Trennen des Schnellkochtopfs (2) von dem Basisgerät ein weiteres Nahrungsmittel mit einem anderen Zubereitungsgefäß (13) und dem Basisgerät (1) zubereitet wird.
